# EUROPÄISCHE PATENTSCHRIFT

(11) **EP 1 760 445 B1**
(45) Veröffentlichungstag und Bekanntmachung des Hinweises auf die Patenterteilung: **24.12.2008**
(21) Anmeldenummer: 05108140.4
(22) Anmeldetag: 06.09.2005
(51) Int. Cl.: G01M 13/02, G06F 17/50, F16H 59/00

(54) **Vorrichtung und Verfahren zur Vereinfachung der Beurteilung des akustischen Verhaltens einer Komponente in einem Kraftfahrzeug**
Device and method for simplifying the rating of the acoustics of a component in a vehicle
Dispositif et procédé pour simplifier le classement des prestations acoustiques d'un élément d'un véhicule

(43) Veröffentlichungstag der Anmeldung: 07.03.2007
(73) Patentinhaber: Getrag Ford Transmissions GmbH, 50725 Köln (DE)
(72) Erfinder: Schnorbach, Karl, 50767, Köln (DE)
(74) Vertreter: Dörfler, Thomas

(56) Entgegenhaltungen:
- DATABASE SAE [Online] SOCIETY OF AUTOMOTIVE ENGINEERS, WARRENDALE, PA, US; 2003-01-0674 3. März 2003 (2003-03-03), FUJIMOTO, KIZUKA: "Audible noise simulation - an attempt to predict idling rattle in manual transmissions" XP002366570 gefunden im WWW.ELECPUBS.SAE.ORG
- DATABASE SAE [Online] SOCIETY OF AUTOMOTIVE ENGINEERS, WARRENDALE, PA, US; 2000-01-2690 3. Oktober 2000 (2000-10-03), SCHOLL, HADDOW: "Construction and applications of a mechanical rattle-sound generator" XP002366571 gefunden im WWW.ELECPUBS.SAE.ORG
- DATABASE SAE [Online] SOCIETY OF AUTOMOTIVE ENGINEERS, WARRENDALE, PA, US; 2001-01-1539 2001, ALT, WIEHAGEN, SCHLITZER: "Interior noise simulation for improved vehicle sound" XP002366572 gefunden im WWW.ELECPUBS.SAE.ORG
- DATABASE SAE [Online] SOCIETY OF AUTOMOTIVE ENGINEERS, WARRENDALE, PA, US; 2005-01-2514 16. Mai 2005 (2005-05-16), EISELE, WOLFF, ALT: "Application of vehicle interior noise simulation (VINS) for NVH analysis of a passenger car" XP002366573 gefunden im WWW.ELECPUBS.SAE.ORG
- DATABASE SAE [Online] SOCIETY OF AUTOMOTIVE ENGINEERS, WARRENDALE, PA, US; 1999-01-1757 17. Mai 1999 (1999-05-17), BOCKSCH, SCHNEIDER, MOORE, VER: "Empirical noise model for power train noise in a passenger vehicle" XP002366574 gefunden im WWW.ELECPUBS.SAE.ORG
- RIES R ET AL: "INTERDISZIPLINAERE METHODIK UND IHRE ANWENDUNG ZUR SICHERSTELLUNG EINER HOHEN GERAEUSCHQUALITAET BEI DER ENTWICKLUNG VON GETRIEBEN UND DEREN INTEGRATION IN FAHRZEUGE INTERDISCIPLINARY METHOD AND ITS APPLICATION TO ENSURE A HIGH SOUND QUALITY LEVEL DURIN" VDI BERICHTE, DUESSELDORF, DE, Nr. 1827, 2004, Seiten 817-832,836, XP008058792 ISSN: 0083-5560

## Beschreibung

Die Erfindung betrifft eine Vorrichtung und ein Verfahren zur Vereinfachung der Beurteilung des akustischen Verhaltens einer Komponente eines Kraftfahrzeugs, die im Betrieb des Kraftfahrzeugs ein Geräusch erzeugt.

Eine derartige Komponente ist beispielsweise ein Schaltgetriebe in dem Kraftfahrzeug. Die Beurteilung von Getriebegeräuschen stellt dabei in der Praxis eine komplexe Aufgabe dar. Sie erfordert von einem Testfahrer ein hohes Maß an Erfahrung. Erfahrung bedeutet in diesem Fall, dass der Testfahrer schon regelmäßig Getriebe gefahren bzw. gehört haben muss, die basierend auf unterschiedlichsten Ursachen ein zu lautes oder ein unerwünschtes Geräusch emittieren. Das Geräuschverhalten dieser zu lauten Getriebe muss er mit dem zu prüfenden Getriebe im Kraftfahrzeug vergleichen.

In der Veröffentlichung SAE Technical Paper 2003-01-0674, "Audible Noise Simulation - an Attempt to Predict ldling Rattle in Manual Transmissions -", XP-002366570, ist ein Verfahren und eine Vorrichtung zur Bestimmung von Getriebegeräuschen beschrieben. Am Getriebe werden Übertragungsfunktionen für verschiedene Getriebezustände gemessen und in eine Rechnereinheit eingelesen. Abhängig von einer vorgegebenen Motordrehzahl und dem vorgegebenen Getriebezustand wird mittels der Übertragungsfunktionen ein Getriebegeräusch berechnet und dieses berechnete Geräusch mittels einer Tonerzeugungseinheit ausgegeben. Dieses Verfahren ist nicht geeignet, um die im wirklichen Betrieb auf einer Straße, z. B. während einer Testfahrt, auftretenden Geräusche zu analysieren.

Zum Klassifizieren der Getriebegeräusche wird in der Regel ein Ratingsystem verwendet, das die Getriebegeräusche in zehn Klassen unterteilt. Während ein Getriebe, das sehr laute Geräusche von sich gibt, der Klasse 1 zugeordnet wird, wird ein Getriebe, was nahezu geräuschlos bzw. nicht hörbar arbeitet, der Klasse 10 zugeordnet. Getriebe, die zwischen den oben genannten Extremfällen liegen, werden entsprechend den Klassen 2 bis 9 zugeordnet.

Insbesondere ab einem Rating der Klasse 6 wird eine Beurteilung für den Testfahrer sehr schwierig. Der Unterschied zwischen einem störenden Geräusch einerseits und einem kaum hörbaren Geräusch andererseits ist gering. Diese leisen Töne sind schwer erkennbar und dementsprechend kaum dem zu prüfenden Getriebe zuzuordnen. Vor allem ist eine differenzierte Klassifizierung schwer, da je nach Übersetzung des Getriebes oder je nach Drehzahlbereich des Motors im Kraftfahrzeug auch andere Aggregate des Kraftfahrzeuges Frequenzen erzeugen können, die den Frequenzen ähnlich sind, die das zu prüfende Getriebe emittiert. Nicht immer hilft Auskuppeln oder ein Hochdrehen des Motors im Leerlauf zum Ausschluss fremder Frequenzen oder Ordnungen. Die Amplituden der Motorfrequenzen können sich auch unter Last anders als im Stand verhalten. Des Weiteren muss der Testfahrer bei der Prüfung von Getrieben auch Frequenzen höherer Ordnung erkennen können, die beispielsweise auf geschädigte Zahnflanken der im Getriebe eingebauten Zahnräder zurückzuführen sind.

Ein gut trainierter Testfahrer kann ein Geräusch oder einen störenden Ton zweifelsfrei erkennen. Ein Zuordnen dieses störenden Tons oder des Geräuschverursachers ist jedoch sehr schwierig und ist sehr subjektiv geprägt. Andererseits gibt es zwar Verfahren, die derzeit als objektive Verfahren anerkannt sind, diese sind jedoch messtechnisch sehr zeitaufwendig und komplex. Des weiteren können diese Verfahren nur im Nachhinein ausgewertete werden. Ein direkter Bezug zu dem beanstandeten Geräusch ist nicht hergestellt.

Der Erfindung liegt daher die Aufgabe zugrunde, eine Vorrichtung bereitzustellen, mit deren Hilfe die Beurteilung des akustischen Verhaltens von Geräusch emittierenden Komponenten in einem Kraftfahrzeug vereinfacht wird.

Die der Erfindung zugrunde liegende Aufgabe wird mit der Vorrichtung gemäß Anspruch 1 gelöst. Bevorzugte Ausführungsbeispiele der erfindungsgemäßen Vorrichtung können den Unteransprüchen entnommen werden.

Die erfindungsgemäße Vorrichtung weist eine Leseeinheit zum Einlesen der Motordrehzahl des Kraftfahrzeuges sowie von Daten auf, mittels derer eine Grundfrequenz des Geräusches der Komponente, deren akustisches Verhalten beurteilt werden soll, bzw. ein Verhältnis dieser Grundfrequenz zur Motordrehzahl bestimmt werden kann. Des Weiteren weist die Vorrichtung eine Recheneinheit auf, durch die die Grundfrequenz oder ein Vielfaches der Grundfrequenz bei Vorgabe der Motordrehzahl ermittelt oder berechnet werden kann. Auch weist die Vorrichtung eine Tonerzeugungseinheit auf, durch die parallel zum Geräusch der Komponente während des Betriebes des Kraftfahrzeuges wenigstens ein Ton mit einer Frequenz erzeugt werden kann, der der ermittelten Grundfrequenz oder einem Vielfachen der Grundfrequenz entspricht, so dass das Geräusch der Komponente simuliert werden kann.

Zunächst macht die Erfindung davon Gebrauch, dass das Geräusch einer Komponente in dem Kraftfahrzeug insbesondere, wenn es sich um eine Komponente des Antriebsstrangs des Kraftfahrzeuges handelt, in der Regel eine periodische Schwingung ist, deren Periodendauer von der Motordrehzahl des Motors abhängt. Nach dem Satz von Fourier lässt sich jede periodische Schwingung oder Funktion mit der Periodendauer T=2Π/Ω₀ unter bestimmten Voraussetzungen eindeutig durch eine Summe von Sinus- und Kosinusfunktionen mit den Kreisfrequenzen Ω₀, 2Ω₀, 3Ω₀... darstellen. Die Grundfrequenz eines periodischen Geräusches berechnet sich dabei aus Kreisfrequenz Ω₀ dividiert durch den Wert 2Π. Somit lässt sich jedes periodische Geräusch durch eine Summe von Sinus- und Kosinusschwingungen mit unterschiedlichen Amplituden und unterschiedlichen Kreisfrequenzen darstellen.

Die Tonerzeugungseinheit ist erfindungsgemäß in der Lage, einen Ton mit der Frequenz zu erzeugen, der der Grundfrequenz oder einem Vielfachen der Grundfrequenz des Geräusches der Komponente entspricht, deren akustisches Verhalten beurteilt werden soll. Der Ton wird dabei vorzugsweise in Echtzeit erzeugt, was bedeutet, dass der Testfahrer in dem Kraftfahrzeug einerseits die Geräusche des Kraftfahrzeuges und andererseits den erzeugten Ton hören kann. Durch einen Vergleich des erzeugten Tons, von dem der Testfahrer weiß, dass dieser das Geräusch der zu prüfenden Komponente simuliert, und den Geräuschen, die das Fahrzeug emittiert, kann der Testfahrer das Geräusch der betreffenden Komponente in einfacher Weise identifizieren und entsprechend eine Bewertung vornehmen, ob dieses der Komponente zuzuordnende Geräusch zu laut und störend oder akzeptabel ist. Somit bietet die erfindungsgemäße Vorrichtung dem Testfahrer in Abhängigkeit der Motordrehzahl einen Referenzton, den er mit den einzelnen Geräuschen aus dem Kraftfahrzeug vergleichen kann.

Vorzugsweise liest die Leseeinheit Daten ein, mittels derer Grundfrequenzen von Geräuschen unterschiedlicher Komponenten vorzugsweise des Antriebsstranges des Kraftfahrzeuges bestimmt werden können, wobei durch die Recheneinheit bei Vorgabe der Motordrehzahl die Grundfrequenz des Geräusches jeder der unterschiedlichen Komponenten ermittelt werden kann und wobei eine Auswahl der Komponente möglich ist, deren Geräusch durch den entsprechenden Ton aus der Tonerzeugungseinheit simuliert werden soll. Dies versetzt den Testfahrer in die Lage, das akustische Verhalten unterschiedlicher Komponenten zu untersuchen. Hört er beispielsweise im Fahrbetrieb des Kraftfahrzeuges ein Geräusch, dessen Zuordnung zu der einen oder zu der anderen Komponente schwierig ist, so kann er einerseits einen entsprechenden Ton der einen Komponente und andererseits einen entsprechenden Ton der anderen Komponente simulieren und dann entscheiden, welcher simulierte Ton das identifizierte Geräusch genau trifft. Entsprechend kann der Testfahrer das Geräusch der einen oder der anderen Komponente zuordnen.

Vorzugsweise kann die Lautstärke des Tons reguliert werden. Somit kann der Testfahrer bei Bedarf den Ton leiser und lauter stellen. Beispielsweise ist es so möglich, dass er den simulierten Ton zunächst laut stellt, um diesen Ton als Referenzton im Ohr zu haben. Danach kann der Testfahrer diesen Referenzton leiser drehen, bis dieser nicht mehr Hörbar ist, um dann diesen noch im Ohr habenden Referenzton mit den einzelnen Geräuschen des Kraftfahrzeuges zu vergleichen. Befindet sich unter diesen Geräuschen ein Geräusch, das dem Referenzton (im Wesentlichen) entspricht, kann der Testfahrer mit großer Sicherheit dieses Geräusch der Komponente zuordnen, deren Geräusch durch den Referenzton simuliert worden ist.

Vorzugsweise kann neben dem wenigstens einen Ton zumindest ein weiterer Ton gleichzeitig erzeugt werden. Dabei hat sich als zweckmäßig erwiesen, wenn das Verhältnis der Lautstärken des wenigstens einen Tons und des weiteren Tons frei eingestellt werden kann. So können Geräuschsituationen simuliert werden, die auf das gleichzeitige Auftreten von Fehlern unterschiedlicher Komponenten zurückzuführen sind.

Bei einem bevorzugten Ausführungsbeispiel weist der wenigstens eine Ton oder der weitere Ton eine Frequenz auf, dessen Verhältnis zur Motordrehzahl frei eingestellt werden kann. Somit ist das Verhältnis durch beispielsweise eingelesene Daten nicht vorgegeben, sondern kann von dem Testfahrer während des Betriebes des Kraftfahrzeuges nach Wunsch gewählt werden.

Auch kann die Wellenform des Tons frei gewählt werden. Beispiele für eine Wellenform sind ein Sinusverlauf, ein Rechteckverlauf, eine positive oder negative Sägezahnkurve oder ein Dreieckverlauf.

Vorzugsweise lassen sich unterschiedliche Schaltzustände einer der Komponenten, insbesondere eines Schaltgetriebes mit mehreren schaltbaren Zahnradpaarungen, einlesen oder ermitteln, wobei die Frequenz des Tons, der von der Tonerzeugungsanlage erzeugt wird, vom entsprechenden Schaltzustand abhängt. Wird das Schaltgetriebe beispielsweise in einem dritten (Vorwärts-)Gang betrieben, so steht ein dem dritten Gang zugeordnetes Zahnradpaar mit einer bestimmten Zahneingriffsfrequenz in Eingriff. Diese Zahneingriffsfrequenz hängt von der Motordrehzahl und der Anzahl der Zähne eines motorseitigen Zahnrads ab, das das Drehmoment des Motors auf das andere Zahnrad der Zahnradpaarung überträgt. Ggf. müssen noch Übersetzungsverhältnisse berücksichtigt werden, die das Verhältnis der Drehzahl des Motors zur Drehzahl des motorseitigen Zahnrads wiedergeben. Somit kann dem dritten Gang ein bestimmtes Geräusch zugeordnet werden, das sich durch einen Ton mit einer Frequenz, der der Zahneingriffsfrequenz entspricht, simulieren lässt.

Da bei einem anderen (vom dritten Gang abweichenden) Gang ein anderes Zahnradpaar mit anderen Zähnezahlen in Wirkeingriff steht, ergibt sich bei diesem anderen Gang ein anderes Verzahnungsgeräusch des Getriebes. Dieses Verzahnungsgeräusch lässt sich jedoch wiederum bei Kenntnis der Anzahl der Zähne durch einen Ton simulieren, dessen Frequenz der Zahneingriffsfrequenz der nun in Eingriff stehenden Zahnradpaarung entspricht.

Darüber hinaus lassen sich auch Töne erzeugen, deren Frequenz dem Vielfachen der Zahneingriffsfrequenz der in Eingriff stehenden Zahnradpaarung entspricht (höher harmonische Frequenzen). Dadurch können auch Töne simuliert werden, die z. B. auf geschädigte Zahnflanken zurückzuführen sind.

Das erfindungsgemäße Verfahren zur Vereinfachung der Beurteilung des akustischen Verhaltens wenigstens einer ein Geräusch emittierenden Komponente vorzugsweise eines Antriebsstranges eines Kraftfahrzeuges kennzeichnet sich durch folgende Schritte aus: Zunächst wird eine Grundfrequenz des Geräusches der Komponente bzw. ein Verhältnis der Grundfrequenz zu einer Motordrehzahl des Kraftfahrzeuges ermittelt. Die augenblickliche Motordrehzahl des Kraftfahrzeuges wird erfasst. Basierend auf dem Verhältnis von Grundfrequenz und Motordrehzahl sowie der erfassten Motordrehzahl wird ein Ton erzeugt. Dieser Ton weist eine Frequenz auf, der der Grundfrequenz des Geräusches der Komponente oder einem Vielfachen der Grundfrequenz entspricht. Durch diesen erzeugten oder simulierten Ton ist während des Betriebs des Kraftfahrzeuges ein Vergleich mit dem Geräusch der Komponente möglich.

Das erfindungsgemäße Verfahren kann vorsehen, mehrere Töne gleichzeitig zu generieren und dabei die einzelnen Amplituden getrennt zu regeln. Diese Töne können Geräusche unterschiedlicher Komponenten simulieren. Auch kann ein Ton mit der Grundfrequenz einer Komponente und ein anderer Ton mit dem Vielfachen der Grundfrequenz der gleichen Komponente gleichzeitig erzeugt werden. Bei erfindungsgemäßen Verfahren kann die Lautstärke des Tons oder der Töne frei eingestellt werden.

Anhand eines in den Figuren dargestellten Ausführungsbeispieles soll die Erfindung näher erläutert werden. Es zeigen:
- Figur 1: in schematischer Darstellung eine erfindungsgemäße Vorrichtung; und
- Figur 2: einen Beispielbildschirm der erfindungsgemäßen Vorrichtung.

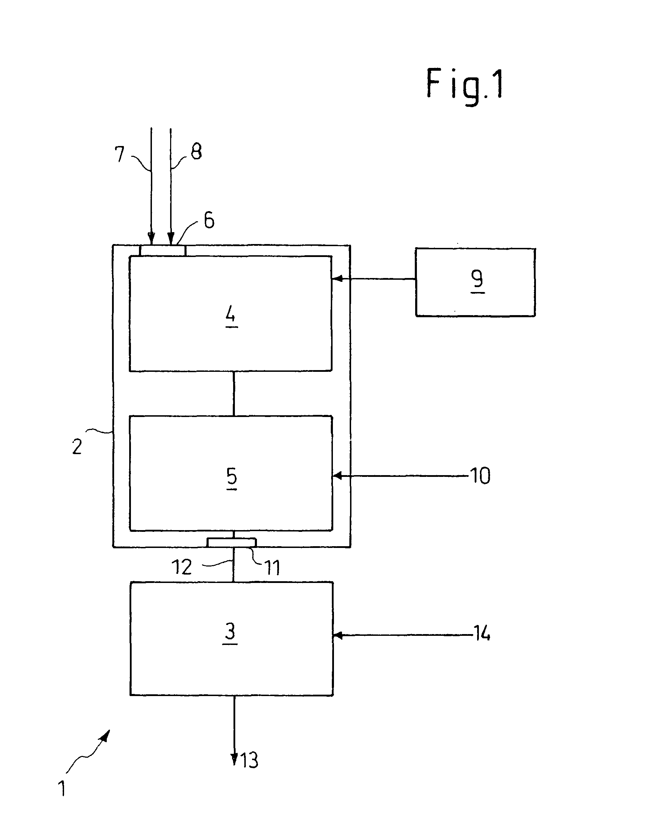

Figur 1 zeigt in schematischer Darstellung eine Vorrichtung zur Vereinfachung der Beurteilung des akustischen Verhaltens eines Schaltgetriebes in einem Kraftfahrzeug. Die Vorrichtung wird in ihrer Gesamtheit mit 1 bezeichnet. Die Vorrichtung 1 umfasst einen Computer 2, der vorzugsweise ein Laptop ist und ohne weiteres Platz findet in dem Innenraum des Kraftfahrzeugs. Des Weiteren umfasst die Vorrichtung 1 eine Tonerzeugungseinheit 3, die hier als Aktivlautsprecher ausgebildet ist.

Der Computer 2 umfasst eine Leseeinheit 4 und eine Recheneinheit. Mittels der Leseeinheit 4 können über eine geeignete Schnittstelle 6 eine Motordrehzahl 7 des Kraftfahrzeuges eingelesen werden, bei dem die erfindungsgemäße Vorrichtung 1 zur Überprüfung der Geräusche des Schaltgetriebes eingesetzt werden soll. Des Weiteren liest die Leseeinheit 4 weitere Informationen 8 bezüglich des augenblicklich eingelegten Ganges des Schaltgetriebes des Fahrzeuges über die Schnittstelle 6 ein. Steht diese Information nicht zur Verfügung, kann der eingelegte Gang vom System berechnet werden, indem z. B. über das Übersetzungsverhältnis aufgrund der gemessenen Drehzahlen bestimmt wird, woraus ein bestimmter Gang folgt.

Die geeignete Schnittstelle 6 kann beispielsweise ein PMCIA-Slot auf der Seite des Computers 2 und eine CAN-Card X oder CAN-Card XL im PMCIA-Format umfassen. Die Verbindung der Schnittstelle 6 mit dem Kraftfahrzeug erfolgt über geeignete Anschlusskabel, wobei das Kraftfahrzeug zur Bereitstellung der notwendigen Informationen ebenfalls eine geeignete Auslesemöglichkeit aufweisen muss.

Des Weiteren müssen Daten 9 bezüglich des Antriebsstranges des Kraftfahrzeuges zur Verfügung gestellt werden. Anhand dieser Daten 9, die in Form einer Datei abgespeichert sein können, lässt sich der Antriebsstrang des Kraftfahrzeuges hinsichtlich Übersetzungsverhältnisse, Ordnungen der Anregungen der einzelnen Komponenten wie Vorderachse, Hinterachse, Getriebe etc. abbilden. So kann anhand der Daten 9 jeder abgebildeten Komponente des Antriebsstranges eine Grundfrequenz zugeordnet werden, die die Komponente bei einer bestimmten Motordrehzahl 7 im Betrieb des Fahrzeuges emittiert. Insbesondere stehen für das zu untersuchende Schaltgetriebe die Daten der einzelnen Gänge hier zur Verfügung. Anhand dieser Daten lässt sich für jeden Gang die Zahneingriffsfrequenz bzw. das Verhältnis dieser Zahneingriffsfrequenz zu der Motordrehzahl berechnen.

Durch eine Auswahl 10, die durch einen Testfahrer im Kraftfahrzeug vorgenommen werden kann, kann die Komponente des Antriebsstranges ausgewählt werden, deren Geräusch durch einen Ton simuliert werden soll. Die Recheneinheit 5 bzw. der Computer 2 berechnet die Frequenz dieses Tons aus der Motordrehzahl 7, aus den Daten 9 und, soweit das Geräusch des Schaltgetriebes simuliert werden soll, aus der Information bezüglich des eingelegten Ganges. Über eine geeignete Schnittstelle 11 wird die berechnete Frequenz für den Ton in Form eines Signals 12 zum Aktivlautsprecher 3 geleitet, der daraus einen hörbaren Ton 13 mit entsprechender Frequenz erzeugt. Über eine Lautstärkeregelung 14 zum Beispiel durch einen Drehknopf am Aktivlautsprecher 12 lässt sich die Lautstärke des Tons 13 regulieren.

Bei der Auswahl des Aktivlautsprechers 3 ist unbedingt auf eine gute Qualität zu achten. Billige Lautsprecher lassen sich mit der Lautstärkeregelung 14 nicht vollkommen stumm regeln. Dies aber ist eine grundsätzliche Voraussetzung der erfindungsgemäßen Vorrichtung. Andernfalls würde der Testfahrer bei aktivierter Vorrichtung ein zwar leises, aber doch permanentes simuliertes Geräusch eingespielt bekommen, was einer möglichst objektiven Beurteilung des akustischen Verhaltens des Schaltgetriebes abträglich wäre.

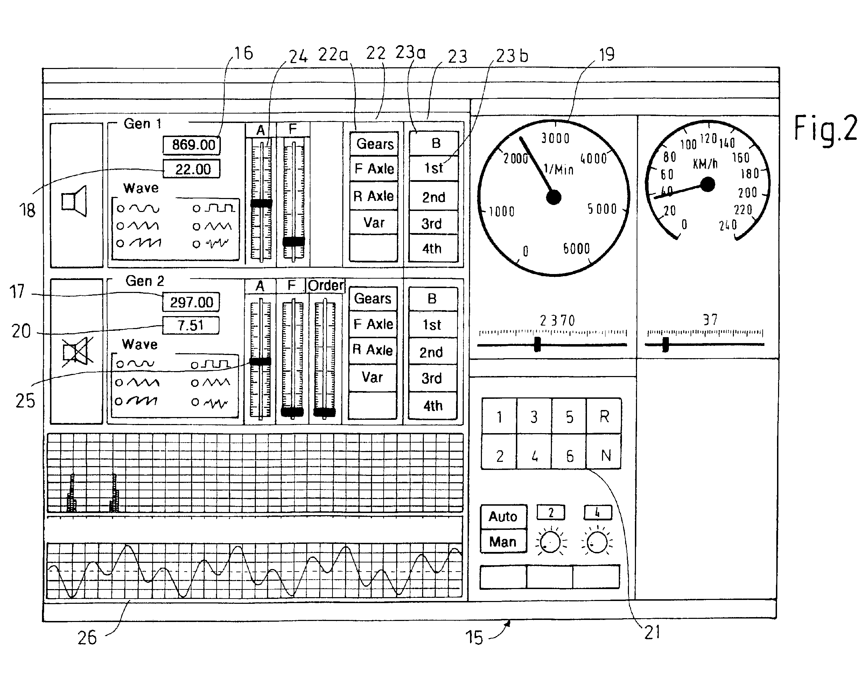

Figur 2 zeigt einen Beispielbildschirm 15 des Computers 2. Wie dem Bildschirm 15 zu entnehmen ist, können durch die Vorrichtung 1 ein erster Ton und ein zweiter Ton gleichzeitig erzeugt werden. Die Frequenz des ersten Tons wird in einem Anzeigefeld 16 angezeigt, während die Frequenz des zweiten Tons einem Anzeigefeld 17 zu entnehmen ist. Unter dem Anzeigefeld 16 ist ein Anzeigefeld 18 angeordnet, das das Verhältnis der Frequenz des ersten Tons (vgl. Feld 16) zur Drehzahl des Motors wiedergibt, die durch ein Anzeigefeld 19 angezeigt wird. Entsprechend dem Anzeigefeld 18 ist unterhalb des Anzeigefeldes 17 ein Anzeigefeld 20 angeordnet, das das Verhältnis der Frequenz des zweiten Tons (vgl. Feld 17) zur Motordrehzahl (vgl. Anzeigefeld 19) wiedergibt.

Ein weiteres Anzeigefeld 21 gibt an, welcher Gang des Schaltgetriebes augenblicklich eingelegt ist. In dem Beispiel der Figur 2 ist dies augenblicklich der zweite (Vorwärts-)Gang.

Mit Hilfe einer Auswahlspalte 22 lässt sich die Komponente auswählen, deren Geräusch durch einen zu erzeugenden Ton simuliert werden soll. Für den ersten Ton ist das Schaltgetriebe ausgewählt (siehe 22a, "Gears"). Alternativ könnte auch die Frontachse ("Front Axle") oder die Hinterachse ("Rear Axle") ausgewählt werden.

Darüber hinaus kann mittels einer Auswahlspalte 23 ausgewählt werden, ob für die ausgewählte Komponente der zu erzeugende Ton die Grundfrequenz der Komponente oder ein Vielfaches dieser Grundfrequenz aufweisen soll. Im Beispiel hier ausgewählt ist für den ersten Ton die Grundfrequenz durch das Feld 23a ("Base"). Alternativ lässt sich beispielsweise durch das Feld 23b ("1.st") die doppelte Grundfrequenz einstellen, was der ersten Höherharmonischen der Grundfrequenz entspricht.

Über die Schieber 24 bzw. 25 lässt sich die Amplitude des ersten Tons bzw. des zweiten Tons einstellen.

Das Ausgabefeld 26 zeigt den zeitlichen Verlauf der Überlagerung des ersten erzeugten Tons und des zweiten erzeugten Tons. Es handelt sich bei der Überlagerung um ein periodisches Signal, da die Frequenz des ersten Tons in etwa mit dem Dreifachen der Frequenz des zweiten Tons übereinstimmt.

### Bezugszeichenliste

- 1: Vorrichtung
- 2: Computer/Laptop
- 3: Tonerzeugungseinheit/Aktivlautsprecher
- 4: Leseeinheit
- 5: Recheneinheit
- 6: Schnittstelle
- 7: Motordrehzahl
- 8: Information bezüglich Schaltzustand
- 9: Daten bezüglich Antriebsstrang
- 10: Auswahl
- 11: Schnittstelle
- 12: Signal
- 13: Ton
- 14: Lautstärkeregelung
- 15: Bildschirm
- 16: Anzeigefeld
- 17: Anzeigefeld
- 18: Anzeigefeld
- 19: Anzeigefeld
- 20: Anzeigefeld
- 21: Anzeigefeld für Schaltzustand
- 22: Auswahlspalte für Komponente
- 23: Auswahlspalte für Frequenz
- 24: Amplitudenregler
- 25: Amplitudenregler
- 26: Signalanzeige

## Patentansprüche

1. Vorrichtung (1) zur Vereinfachung der Beurteilung des akustischen Verhaltens einer ein Geräusch emittierenden Komponente in einem Kraftfahrzeug, mit einer Leseeinheit (4) zum Einlesen von Daten, die für die Bestimmung einer Grundfrequenz des Geräusches der Komponente bzw. eines Verhältnisses der Grundfrequenz zu einer Motordrehzahl (7) notwendig sind, mit einer Recheneinheit (5), durch die die Grundfrequenz oder ein Vielfaches der Grundfrequenz in Abhängigkeit der Motordrehzahl (7) ermittelbar ist,
**dadurch gekennzeichnet, dass**
die Leseeinheit (4) auch zum Einlesen einer Motordrehzahl (7) des Kraftfahrzeugs dient und die Vorrichtung (1) eine Tonerzeugungseinheit (3) umfaßt, durch die während des Betriebs des Kraftfahrzeugs wenigstens ein Ton mit einer Frequenz erzeugbar ist, der der Grundfrequenz oder ein Vielfaches der Grundfrequenz entspricht, sodass das Geräusch zeitgleich simuliert werden kann.

2. Vorrichtung (1) nach Anspruch 1**, dadurch gekennzeichnet, dass** die Leseeinheit (4) Daten einliest, die für die Bestimmung von Grundfrequenzen von Geräuschen unterschiedlicher Komponenten notwendig sind, wobei durch die Recheneinheit (5) die Grundfrequenz des Geräusches jeder der unterschiedlichen Komponenten ermittelbar ist und wobei eine Auswahl der Komponente möglich ist, deren Geräusch durch den entsprechenden Ton aus der Tonerzeugungseinheit (3) simuliert werden soll.

3. Vorrichtung (1) nach Anspruch 1 oder 2, **dadurch gekennzeichnet, dass** die Lautstärke des Tones regulierbar ist.

4. Vorrichtung (1) nach einem der Ansprüche 1 bis 3, **dadurch gekennzeichnet, dass** neben dem wenigstens einen Ton zumindest ein weiterer Ton erzeugbar ist.

5. Vorrichtung (1) nach Anspruch 4, **dadurch gekennzeichnet, dass** das Verhältnis der Lautstärken des wenigstens einen Tons und des weiteren Tons einstellbar ist.

6. Vorrichtung (1) nach einem der Ansprüche 1 bis 5, **dadurch gekennzeichnet, dass** der wenigstens eine Ton oder der weitere Ton eine Frequenz aufweist, deren Verhältnis zur Motordrehzahl (7) frei einstellbar ist.

7. Vorrichtung (1) nach einem der Ansprüche 1 bis 6, **dadurch gekennzeichnet, dass** eine Wellenform des Tones wählbar ist.

8. Vorrichtung (1) nach einem der Ansprüche 1 bis 7, **dadurch gekennzeichnet, dass** unterschiedliche Schaltzustände einer der Komponenten, insbesondere eines Schaltgetriebes mit unterschiedlichen schaltbaren Zahnradpaarungen, einlesbar oder ermittelbar sind und die Frequenz des Tones, der von der Tonerzeugungsanlage (3) erzeugt wird, vom entsprechenden Schaltzustand abhängt.

9. Verfahren zur Vereinfachung der Beurteilung des akustischen Verhaltens wenigstens einer Komponente vorzugsweise eines Antriebsstrangs eines Kraftfahrzeugs, wobei die Komponente im Betrieb des Kraftfahrzeugs ein Geräusch emittiert, **gekennzeichnet durch** folgende Schritte:
- Bestimmung einer Grundfrequenz des Geräusches der Komponente, wobei die Grundfrequenz im festen Verhältnis zur Motordrehzahl (7) des Kraftfahrzeugs steht;
- Erfassen der Motordrehzahl (7) des Kraftfahrzeugs;
- Erzeugung eines Tones, dessen Frequenz der Grundfrequenz des Geräusches der Komponente oder einem Vielfachen der Grundfrequenz entspricht, um den erzeugten Ton im Betrieb des Kraftfahrzeugs mit dem Geräusch der Komponente vergleichen zu können.

## Claims

1. Device (1) for simplifying the rating of the acoustics of a component which emits noise in a motor vehicle, having a reading unit (4) for reading in data which are necessary for determining a fundamental frequency of the noise of the component or a ratio of the fundamental frequency to an engine speed (7), having a computing unit (5) by means of which the fundamental frequency or a multiple of the fundamental frequency can be determined as a function of the engine speed (7), **characterized in that** the reading unit (4) is also used to read in an engine speed (7) of the motor vehicle, and the device (1) comprises a sound-generating unit (3) which, during operation of the motor vehicle, can generate at least one sound with a frequency which corresponds to the fundamental frequency or to a multiple of the fundamental frequency, with the result that the noise can be simulated simultaneously.

2. Device (1) according to Claim 1, **characterized in that** the reading unit (4) reads in data which are necessary for determining fundamental frequencies of noises of different components, wherein the computing unit (5) can determine the fundamental frequency of the noise of each of the different components, and wherein the component whose noise is to be simulated by the corresponding sound from the sound-generating unit (3) can be selected.

3. Device (1) according to Claim 1 or 2, **characterized in that** the volume of the sound can be regulated.

4. Device (1) according to one of Claims 1 to 3, **characterized in that** in addition to the at least one sound at least one further sound can be generated.

5. Device (1) according to Claim 4, **characterized in that** the ratio of the volumes of the at least one sound and of the further sound can be adjusted.

6. Device (1) according to one of Claims 1 to 5, **characterized in that** the at least one sound or the further sound has a frequency whose ratio with respect to the engine speed (7) can be freely adjusted.

7. Device (1) according to one of Claims 1 to 6, **characterized in that** a waveform of the sound can be selected.

8. Device (1) according to one of Claims 1 to 7, **characterized in that** different switched states of one of the components, in particular of a range speed gear mechanism, can be read in or determined with different switchable gearwheel pairings, and the frequency of the sound which is generated by the sound-generating system (3) depends on the corresponding switched state.

9. Method for simplifying the rating of the acoustics of at least one component, preferably of a drive train of a motor vehicle, wherein the component emits noise during operation of the motor vehicle, **characterized by** the following steps:
- a fundamental frequency of the noise of the component is determined, wherein the fundamental frequency has a fixed ratio to the engine speed (7) of the motor vehicle;
- the engine speed (7) of the motor vehicle is recorded;
- a sound whose frequency corresponds to the fundamental frequency of the noise of the component or to a multiple of the fundamental frequency is generated in order to be able to compare the generated sound during operation of the motor vehicle with the noise of the component.

## Revendications

1. Dispositif (1) pour simplifier l'évaluation du comportement acoustique d'un composant émettant un bruit dans un véhicule automobile, comprenant une unité de lecture (4) pour relever des données qui sont nécessaires pour la détermination d'une fréquence fondamentale du bruit du composant ou d'un rapport entre la fréquence fondamentale et un régime du moteur (7), comprenant une unité de calcul (5) à l'aide de laquelle peut être déterminée la fréquence fondamentale ou un multiple de la fréquence fondamentale en fonction du régime du moteur (7), **caractérisé en ce que** l'unité de lecture (4) sert également à relever un régime du moteur (7) du véhicule automobile et le dispositif (1) comprend une unité génératrice de signal sonore (3) qui permet, pendant le fonctionnement du véhicule automobile, de générer au moins un signal sonore à une fréquence qui correspond à la fréquence fondamentale ou à un multiple de la fréquence fondamentale, de sorte que le bruit puisse être simulé simultanément.

2. Dispositif (1) selon la revendication 1, **caractérisé en ce que** l'unité de lecture (4) relève des données qui sont nécessaires pour déterminer les fréquences fondamentales de bruits de différents composants, la fréquence fondamentale du bruit de chacun des différents composants pouvant être déterminée par l'unité de calcul (5) et une sélection des composants dont le bruit doit être simulé par le signal sonore correspondant provenant de l'unité génératrice de signal sonore (3) étant possible.

3. Dispositif (1) selon la revendication 1 ou 2, **caractérisé en ce que** le volume du signal sonore est réglable.

4. Dispositif (1) selon l'une des revendications 1 à 3, **caractérisé en ce qu'**au moins un signal sonore supplémentaire peut être généré en plus de l'au moins un signal sonore.

5. Dispositif (1) selon la revendication 4, **caractérisé en ce que** le rapport des volumes de l'au moins un signal sonore et du signal sonore supplémentaire est réglable.

6. Dispositif (1) selon l'une des revendications 1 à 5, **caractérisé en ce que** l'au moins un signal sonore ou le signal sonore supplémentaire présente une fréquence dont le rapport par rapport au régime du moteur (7) est réglable librement.

7. Dispositif (1) selon l'une des revendications 1 à 6, **caractérisé en ce qu'**une forme ondulée du signal sonore peut être choisie.

8. Dispositif (1) selon l'une des revendications 1 à 7, **caractérisé en ce que** les différents états de commutation de l'un des composants, notamment d'une boîte de vitesses comprenant des engrenages pouvant être engagés différemment, peuvent être relevés ou déterminés et la fréquence du signal sonore qui est généré par l'unité génératrice de signal sonore (3) dépend de l'état de commutation correspondant.

9. Procédé pour simplifier l'évaluation du comportement acoustique d'au moins un composant, de préférence une chaîne motrice d'un véhicule automobile, le composant émettant un bruit pendant le fonctionnement du véhicule automobile, **caractérisé par** les étapes suivantes :
- Détermination d'une fréquence fondamentale du bruit du composant, la fréquence fondamentale présentant un rapport fixe par rapport au régime du moteur (7) du véhicule automobile,
- Relevé du régime du moteur (7) du véhicule automobile,
- Génération d'un signal sonore dont la fréquence correspond à la fréquence fondamentale du bruit du composant ou à un multiple de la fréquence fondamentale afin de pouvoir comparer le signal sonore généré pendant le fonctionnement du véhicule automobile avec le bruit du composant.
